# EUROPEAN PATENT APPLICATION

(11) **EP 3 026 782 A1**
(43) Date of publication of application: **01.06.2016**
(21) Application number: 15197015.9
(22) Date of filing: 30.11.2015
(51) Int. Cl.: H02J 7/00

(54) **METHOD FOR CHARGING CONTROL AND AN ELECTRONIC DEVICE THEREOF**

(30) Priority: 28.11.2014 KR 20140168723
(71) Applicant: Samsung Electronics Co., Ltd., Gyeonggi-do 16677 (KR)
(72) Inventor: Yoon, Sung-Geun, Hwaseong-si (KR); Park, Chul-Woo, Suwon-si (KR); Lee, Kisun, Hwaseong-si (KR); Jung, Ku-Chul, Seoul (KR)
(74) Representative: Nederlandsch Octrooibureau

(57) **Abstract**

A charging control method and an electronic device for handling the method are provided. A power management device includes a power switch (184) for providing a power path between a battery (188) and a terminal set (186), and a control module (182) configured to control the power switch (184) to provide a charging function by forming the power path between the battery (188) and the terminal set (186) and provide a battery protection function by forming a discharging path or a charging path with respect to the battery (188).

## Description

### TECHNICAL FIELD

The present disclosure relates to a charging control method and an electronic device.

### BACKGROUND

An electronic device such as a portable terminal, a tablet computer, and a smart phone can be easily carried, and can store and execute various programs. Further, the electronic device can use various additional functions such as Internet search, image capture, video recording, Moving Picture Experts Group phase 1 or phase 2 (MPEG-1 or MPEG-2) audio layer 3 (MP3) audio playback, digital multimedia broadcasting (DMB), and global positioning system (GPS) functions. Usage of such electronic devices is increased due to such functions, and accordingly, a battery power is also being increased to accommodate the increase in the usage frequency of the electronic device.

Therefore, an increase in battery capacity is necessary for a user to carry and use the electronic device.

The above information is presented as background information only to assist with an understanding of the present disclosure. No determination has been made, and no assertion is made, as to whether any of the above might be applicable as prior art with regard to the present disclosure.

### SUMMARY

In general, an electronic device may have a charging system for charging a battery. The charging system may, for example, prevent an abrupt change of charging voltage, prevent an over-voltage or an over-current from being supplied, charge a battery by converting a charging voltage (e.g., 5V) to a voltage (e.g., 3∼4.4V) suitable for battery charging, and prevent over-charging or over-discharging of the battery. For example, a battery charging system may include an over-voltage protection integrated circuit (IC), a charger IC, and a battery protection IC.

To make the electronic device small in size, the charging system also needs to be made small in size. However, the size of the charging system is increased when the number of ICs of the charging system is increased.

In addition, a battery charging time is increased since a voltage drop occurs due to additional ICs associated with the charging system.

Aspects of the present disclosure are to address at least the above-mentioned problems and/or disadvantages and to provide at least the advantages described below. Accordingly, an aspect of the present disclosure is to provide an apparatus and method for charging control.

Another aspect of the present disclosure is to provide an apparatus and method for decreasing a size of a charging system.

In accordance with an aspect of the present disclosure, a charging system for providing a function of a battery protection IC without having to use an additional battery protection IC, and a method thereof is provided.

In accordance with another aspect of the present disclosure, a charging system is provided. The charging system includes a charger IC for battery protection, and a method thereof.

In accordance with another aspect of the present disclosure, a charging system for controlling a function of a battery protection IC by controlling an operation of a charging field-effect transistor (FET) and a discharging FET of a charger IC, and a method thereof is provided.

In accordance with another aspect of the present disclosure, a power management device may include a power switch configured to provide a power path between a battery and a terminal set, and a control module configured to control the switch to provide a charging function by forming the power path between the battery and the terminal set and provide a battery protection function by forming a discharging path or a charging path with respect to the battery.

In accordance with another aspect of the present disclosure, an electronic device is provided. The electronic device includes a terminal set, a battery, and a power manager including a power switch configured to provide a power path between the battery and the terminal set, and to provide a charging function and a battery protection function. The power manager may be configured to control the power switch to provide a charging function by forming the power path between the battery and the terminal set and provide a battery protection function by forming a discharging path or a charging path with respect to the battery.

In accordance with another aspect of the present disclosure, a charging method is provided. The charging method includes providing a charging function by controlling a switch to form a power path between a battery and a terminal set in response to supply of charging power, and providing a battery protection function by controlling the switch to form a discharging path or a charging path based on a battery state.

In accordance with another aspect of the present disclosure, a computer readable recording medium is provided. The computer readable recording medium includes a program for executing operations of providing a charging function by controlling a switch to form a power path between a battery and a terminal set in response to supply of charging power, and providing a battery protection function by controlling the switch to form a discharging path or a charging path on the basis of a battery state.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1A illustrates an electronic device in a network environment according to various embodiments of the present disclosure;
FIG. 1B is a diagram of a charging system according to various embodiments of the present disclosure;
FIG. 1C illustrates current flow of a power manager according to various embodiments of the present disclosure;
FIG. 2 is a block diagram of an electronic device according to various embodiments of the present disclosure;
FIG. 3 is a block diagram of a program module according to various embodiments of the present disclosure; and
FIG. 4 is a flowchart of a method for power management according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Transitional phrases such as "include" or "may include", etc. indicate the existence of a disclosed relevant function, operation, or element, etc., and do not limit additional one or more functions, operations, or elements, etc. Also, it should be understood that transitional phrases such as "include" or "have", etc. in the present disclosure are intended for designating existence of a characteristic, a number, an operation, an element, a part, or a combination of these described on the specification and do not exclude the existence or additional possibility of one or more other characteristics, numbers, operations, elements, parts, or a combination of these.

Conjunctions such as "and", "or", "and/or," etc. in the present disclosure includes a certain and all combinations of words listed together. For example, "A or B" may include A and may include B, or include both A and B.

In the present disclosure, expressions such as "1st", "2nd", "first" or "second", etc. may modify various elements of the present disclosure but do not limit relevant elements. For example, the expressions do not limit sequence and/or importance, etc. of relevant elements. The expressions may be used for distinguishing different elements. For example, both a first user apparatus and a second user apparatus are all user apparatuses, and represent different user apparatuses. For example, a first element may be named as a second element without departing from the scope of the present disclosure, and similarly, the second element may be named as the first element.

When it is mentioned that a certain element is "connected to" or "accesses" another element, it should be understood that the element may be directly connected to another element or may directly access another element, but still another element may exist in the middle. In contrast, when it is mentioned that a certain element is "directly connected to" or "directly accesses" another element, it should be understood that still another element does not exist in the middle.

The present disclosure is provided for explaining disclosing various embodiments and is not intended for limiting the present disclosure.

Unless defined differently, all terminologies used herein including technological or scientific terminologies have the same meaning as that generally understood by a person of ordinary skill in the art to which the present disclosure belongs. It should be understood that generally used terminologies defined by a dictionary have meaning coinciding with meaning on context of a related technology, and unless clearly defined in the present disclosure, they are not understood as an ideal or excessively formal meaning.

An electronic device according to the present disclosure may include a communication function. For example, an electronic device may include at least one of a smartphone, a tablet personal computer (PC), a mobile phone, a video phone, an e-book reader, a desktop PC, a laptop PC, a netbook computer, a personal digital assistant (PDA), a portable multimedia player (PMP), a Moving Picture Experts Group phase 1 or phase 2 (MPEG-1 or MPEG-2) audio layer 3 (MP3) player, a mobile medical device, a camera, or a wearable device (e.g., a head-mounted-device (HMD) such as electronic glasses, an electronic clothing, an electronic bracelet, an electronic necklace, an electronic appcessory, an electronic tattoo, or a smartwatch).

According to various embodiments, an electronic device may be a smart home appliance having a communication function. A smart home appliance may include, for example, at least one of a television (TV), a digital video disc (DVD) player, an audio, a refrigerator, an air conditioner, a cleaner, an oven, an electronic range, a washing machine, an air purifier, a set-top box, a TV box (e.g., Samsung HomeSync™, Apple TV™, or Google TV™), a game console, an electronic dictionary, an electronic key, a camcorder, or an electronic frame.

According to various embodiments, an electronic device may include at least one of various medical devices (e.g., magnetic resonance angiography (MRA), magnetic resonance imaging (MRI), computed tomography (CT), a shooting device, an ultrasonic device, etc.), a navigation device, a global positioning system (GPS) receiver, an event data recorder (EDR), a flight data recorder (FDR), an automobile infotainment device, electronic equipment for a ship (e.g., a navigation device for a ship, a gyro compass, etc.), avionics equipment, a security device, or a robot for industrial use or home use.

According to various embodiments, an electronic device may include at least one of a furniture or a portion of a building/structure including a communication function, an electronic board, an electronic signature receiving device, a projector, or various measurement devices (e.g., a water meter, an electric meter, a gas meter, or a radio wave measuring device, etc.). An electronic device according to the present disclosure may be a combination of one or more of the above-described devices. Also, the electronic device according to the present disclosure is not limited to the above-described devices.

Hereinafter, an electronic device according to various embodiments of the present disclosure is described with reference to the accompanying drawings. A "user" may indicate a person who uses an electronic device or a device (e.g., an artificial intelligence electronic device) that uses the electronic device.

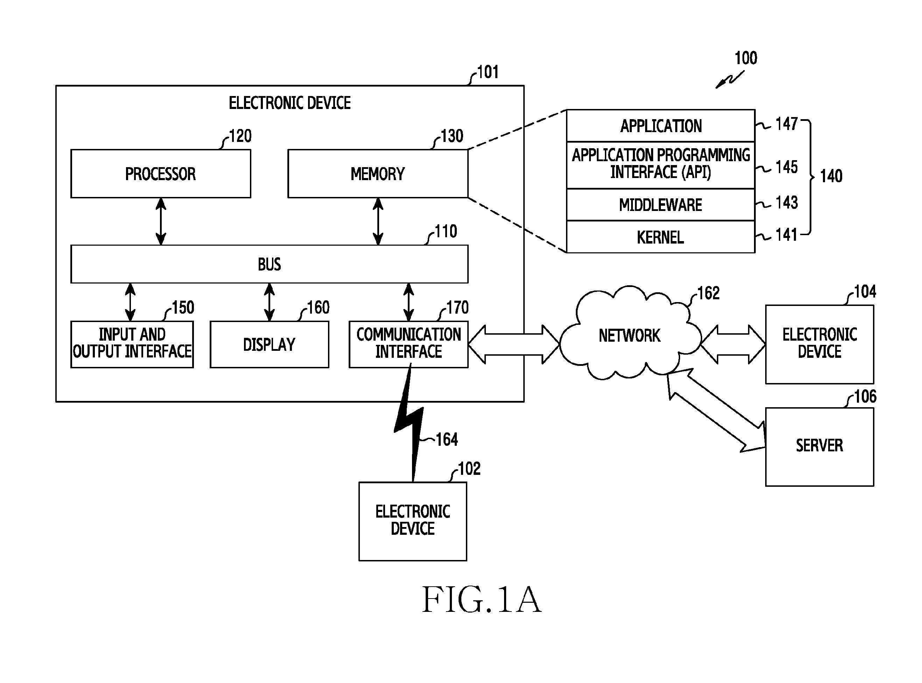

FIG. 1A illustrates an electronic device in a network environment according to various embodiments of the present disclosure.

Referring to FIG. 1A, a network environment 100 includes an electronic device 101. The electronic device 101 may include a bus 110, a processor 120, a memory 130, an input/output (I/O) interface 150, a display 160, and a communication interface 170.

The bus 110 may be a circuit for connecting the above-described elements with each other, and transferring communication (e.g., a control message) between the above-described elements.

The processor 120 may include any suitable type of processing circuitry, such as one or more general-purpose processors (e.g., a reduced instruction set computing (RISC) processor), a digital signal processor (DSP), a programmable logic device (PLD), an application-specific integrated circuit (ASIC), a field-programmable gate array (FPGA), a communication processor (CP), a graphics processing unit (GPU) etc.

The processor 120 may receive, for example, an instruction from the above-described other elements (e.g., the memory 130, the I/O interface 150, the display 160, or the communication interface 170, etc.) via the bus 110, decode the received instruction, and execute an operation or a data process corresponding to the decoded instruction.

The memory 130 may include any suitable type of volatile or non-volatile memory, such as random access memory (RAM), read-only memory (ROM), network accessible storage (NAS), cloud storage, a solid state drive (SSD), etc. The memory 130 may store an instruction or data received from the processor 120 or other elements (e.g., the I/O interface 150, the display 160, or the communication interface 170, etc.), or generated by the processor 120 or other elements. The memory 130 may store, for example, programming modules 140 such as a kernel 141, a middleware 143, an application programming interface (API) 145, or at least one application 147. The programming modules may be configured using a software, a firmware, a hardware, or a combination of two or more of these.

The kernel 141 may control or manage system resources (e.g., the bus 110, the processor 120, or the memory 130, etc.) used for executing an operation or a function implemented in the rest of the programming modules, for example, the middleware 143, the API 145, or the application 147. Also, the kernel 141 may provide an interface for allowing the middleware 143, the API 145, or the application 147 to access elements of the electronic device 101 and control or manage the same.

The middleware 143 may perform a mediation role so that the API 145 or the application 147 may communicate with the kernel 141 to provide and receive data. Also, in connection with task requests received from the applications 147, the middleware 143 may perform a control (e.g., scheduling or load balancing) for a task request using, for example, a method of assigning priority that may use a system resource (e.g., the bus 110, the processor 120, or the memory 130, etc.) of the electronic device 101.

The API 145 is an interface for allowing the application 147 to control a function provided by the kernel 141 or the middleware 143, and may include at least one interface or function (e.g., an instruction) for file control, window control, image processing, or character control, etc.

According to various embodiments, the application 147 may include a short message service/multimedia messaging service (SMS/MMS) application, an e-mail application, a calendar application, alarm application, a health care application (e.g., an application for measuring quantity of motion or blood sugar, etc.), or an environment information application (e.g., an application providing atmospheric pressure, humidity or temperature information, etc.). The application 147 may perform information exchange with an external electronic device (e.g., the electronic device 102 or 104). The application related to the information exchange may include, for example, a notification relay application for transferring specific information to the external electronic device or a device management application for managing the external electronic device.

For example, the notification relay application may transfer notification information generated from a different application (e.g., an SMS/MMS application, an e-mail application, a health care application, or an environment information application) to an external electronic device (e.g., the electronic device 102 or 104). The notification relay application may, for example, receive notification information from an external electronic device (e.g., the electronic device 102 or 104) and provide the same to a user. A device management application may manage (e.g., install, delete, or update) a function (e.g., turn-on/turn-off of an external electronic device itself (or some constituent part) or luminance (or resolution) control of a display) of an external electronic device (e.g., the electronic device 102 or 104) communicating with the electronic device 101 and an application operating in the external electronic device or a service (e.g., a communication service or a message service) provided by the external electronic device.

According to various embodiments, the application 147 may include a designated application based on an attribute (e.g., a kind of an electronic device) of the external electronic device (e.g., the electronic device 104). For example, if the external electronic device is an MP3 player, the application 147 may include an application related to music reproduction. Similarly, if the external electronic device is a mobile medical health care device, the application 147 may include an application related to health care. The application 147 may include at least one of an application designated in the electronic device 101 and an application received from the external electronic device (e.g., the server 106, the electronic device 102 or 104).

The I/O interface 150 may transfer an instruction or data input from a user via an I/O unit (e.g., a sensor, a keyboard, or a touchscreen) to the processor 120, the memory 130, or the communication interface 170 via the bus 110, for example. For example, the I/O interface 150 may provide data regarding a user's touch input via the touchscreen to the processor 120. Also, the I/O interface 150 may, for example, output an instruction or data received via the bus 110 from the processor 120, the memory 130, or the communication interface 170 via the I/O unit (e.g., a speaker or a display). For example, the I/O interface 150 may output voice data processed by the processor 120 to a user via a speaker.

The display 160 may include, for example, a liquid crystal display (LCD), a light emitting diode (LED) display, an organic LED (OLED) display, a micro electro mechanical system (MEMS) display, or an electronic paper display. The display 160 may display various types of contents (for example, text, images, videos, icons, or symbols) for users. The display 160 may include a touch screen, and may receive, for example, a touch, gesture, proximity, or hovering input by using an electronic pen or a part of the user's body.

The display 160 may display a contact list based on a priority contacts included in the contact list. For example, the priority of the contacts may be determined based on at least one of a transmission history, a transmission frequency, a transmission speed, a charging policy, intimacy, a counterpart's location, a schedule, or an application preference.

The display 160 may display a service list based on a priority of each of the applications or services included in the service list. For example, the priority of the applications or services may be determined based on configuration information of a service provider, configuration information of a manufacturer, contact information, application preference, user preference, a usage time, a distance from a target to share contents, a transmission history, and a charging policy.

The communication interface 170 may connect communication between the electronic device 101 and an external device (for example, the electronic device 104 or the server 106). For example, the communication interface 170 may be connected to a network 162 through wireless communication or wired communication, and may communicate with an external device.

The wireless communication may use at least one of, for example, long term evolution (LTE), LTE-advanced (LTE-A), code division multiple access (CDMA), wideband CDMA (WCDMA), universal mobile telecommunications system (UMTS), wireless broadband (WiBro), and global system for mobile communications (GSM) as a cellular communication protocol.

The wireless communication may include at least one of, for example, wireless fidelity (Wi-Fi), Bluetooth® (BT), BT low energy (BLE), Zigbee®, infrared (IR) communication, and ultrasonic communication as a short-range communication protocol 164.

The wired communication may include, for example, at least one of universal serial bus (USB), high definition multimedia interface (HDMI), recommended standard 232 (RS-232), and plain old telephone service (POTS).

The network 162 may include at least one communication network such as a computer network (for example, a local area network (LAN) or a wide area network (WAN)), the Internet, and a telephone network.

The electronic devices 102 and 104 may be the same type of device as the electronic device 101 or may be different types. The server 106 may include a group of one or more servers. All or some of the operations executed in the electronic device 101 may be carried out in another electronic device or a plurality of electronic devices (for example, the electronic device 102 or 104 and the server 106). When the electronic device 101 should perform some functions or services automatically or by a request, the electronic device 101 may make a request for performing at least some functions related to the functions or services to another device (for example, the electronic device 102 or 104, or the server 106) instead of performing the functions or services by itself or additionally. The electronic device (for example, the electronic device 102 or 104, or the server 106) may perform the functions requested by the electronic device 101 and provide results thereof to the electronic device 101. The electronic device 101 may provide the requested functions or services to another electronic device based on the received results or after additionally processing the received results. To this end, for example, cloud computing, distributed computing, or client-server computing technology may be used.

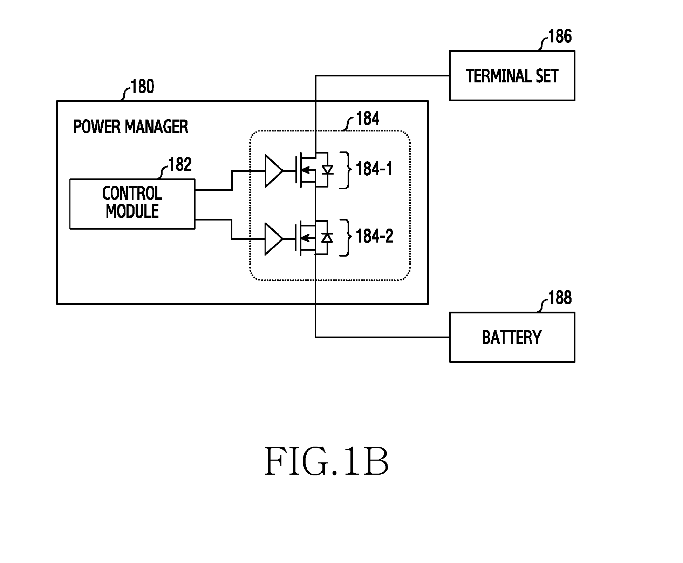

FIG. 1B illustrates a diagram of a charging system according to various embodiments of the present disclosure.

Referring to FIG. 1B, the charging system may include a power manager 180, a terminal set 186, and a battery 188.

The power manager 180 may include a power management IC (PMIC) or charger IC of an electronic device for managing the charging of the battery 188. The terminal set 186 may include various elements constituting the electronic device and an IC for connecting the elements. For example, the various elements may include a processor (e.g., an application processor (AP), a CP, etc.) for controlling an overall operation of the electronic device, an audio processor including a microphone for collecting voice and a speaker for reproducing the voice, a radio frequency (RF) unit for forming a communication channel with respect to an external system, a key input unit for generating a key input signal, a camera for capturing an image, a display unit for displaying the image, or the like. In addition, the terminal set 186 may further include an IC for connecting elements, a printed circuit board (PCB) on which the IC is fixed, a connector to which a power jack is connected, a charger IC (e.g., the power manager 180) for charging the battery 188, or the like.

The power manager 180 may include a control module 182 and a switch 184, and may perform a charging function and a battery protection function. For example, the power manager 180 may perform the battery protection function without having to employ a battery protection IC for preventing over-charging or over-discharging.

The control module 182 may control the switch 184 so that the power manager performs the charging function and the battery protection function.

To provide the charging function, the control module 180 may control the switch 184 to form a power path for supplying power to the battery 188 and the terminal set 186. For example, the charging function may be associated with at least one of battery insertion, charging adapter insertion, battery full charge (e.g., 4.4v charge), and system cut-off (e.g., 4.3V charging state).

When a situation of performing the charging function is determined, the control module 180 may control the switch 184 to form a power path to the terminal set 186 or the battery 188. For example, when power is supplied from an adapter for converting alternating current to direct current, the control module 180 may form a power path so that charging power (e.g., power supplied from the adapter) is supplied to the battery 188 to charge the battery and battery power (e.g., power supplied from the battery 188) is supplied to the terminal set 186 to operate the electronic device.

If power required by the terminal set 186 is higher than the charging power, the control module 180 may form the power path so that the battery power is supplied to the terminal set 186. In addition, if the power required by the terminal set 186 is lower than or equal to the charging power, the control module 180 may form the power path so that the charging power is supplied only to the battery 188.

The control module 180 may control the switch 184 to form a charging path or a discharging path to perform the battery protection function. For example, the battery protection function may be associated with at least one of a battery over-charge voltage (e.g., 4.45V charge), a battery over-charging current (e.g., 4.5A current), a battery over-discharge voltage (e.g., 3V), a battery over-discharging current (e.g., 4.5A current), and a battery short-circuit.

When an over-charging state of the battery 188 is confirmed, the control module 180 may control the switch 184 to form a discharging path for the battery 188. In addition, when an over-discharging state of the battery 188 is confirmed, the control module 180 may control the switch 184 to form a charging path for the battery 188.

A switch 184 of the power manager 180 may selectively provide a power path between the battery 188 and the terminal set 186. The switch 184 may include a first switch 184-1 for selectively controlling the charging power to be supplied to the battery 188 and a second switch 184-2 for selectively controlling the charging power to be supplied to the battery 188. For example, the first switch 184-1 and the second switch 184-2 may consist of a field-effect transistor (FET). Of course, the switches 184-1 and 184-2 may be implemented by using various types of devices capable of forming the power path.

The first switch 184-1 may be a charging FET, and may include a diode which cuts off the battery power to avoid an overflow to the terminal set 186. In addition, the second switch 184-2 may be a discharging FET, and may include a diode which cuts off the charging power to avoid an overflow to the battery.

The first switch 184-1 or the second switch 184-2 may be in an ON state or an OFF state under the control of the control module 182.

For example, according to a charging function control of the control module 182, the first switch 184-1 and the second switch 184-2 may form a power path so that power can be supplied to the battery 188 or the terminal set 186. For example, the first switch 184-1 may form the power path to supply the charging power to the battery 188, and the second switch 184-2 may form the power path to supply the battery power to the terminal set 186.

For another example, the first switch 184-1 and the second switch 184-2 may form a charging path or a discharging path with respect to the battery. If an instruction for preventing over-charging is generated from the control module 182, the first switch 184-1 and the second switch 184-2 may cut off the charging path for the battery 188 and may form the discharging path for the battery 188. For example, the second switch 184-2 may cut off the power path to prevent the charging power from being supplied to the battery 188, and the first switch 184-1 may maintain the power path so that the battery power is supplied to the terminal set 186. If an instruction for preventing over-discharging is generated from the control module 182, the first switch 184-1 and the second switch 184-2 may cut off a discharging path for the battery 188 and may form a charging path for the battery. For example, the first switch 184-1 may cut off the power path to prevent the battery power from being supplied to the terminal set, and the second switch 184-2 may maintain the power path so that the charging power is supplied to the battery.

The battery 188 may be charged by the charging power that is supplied through the charging path formed by the switch 184. In addition, the battery 188 may supply the battery power to the terminal set 186 through the discharging path formed by the switch 184.

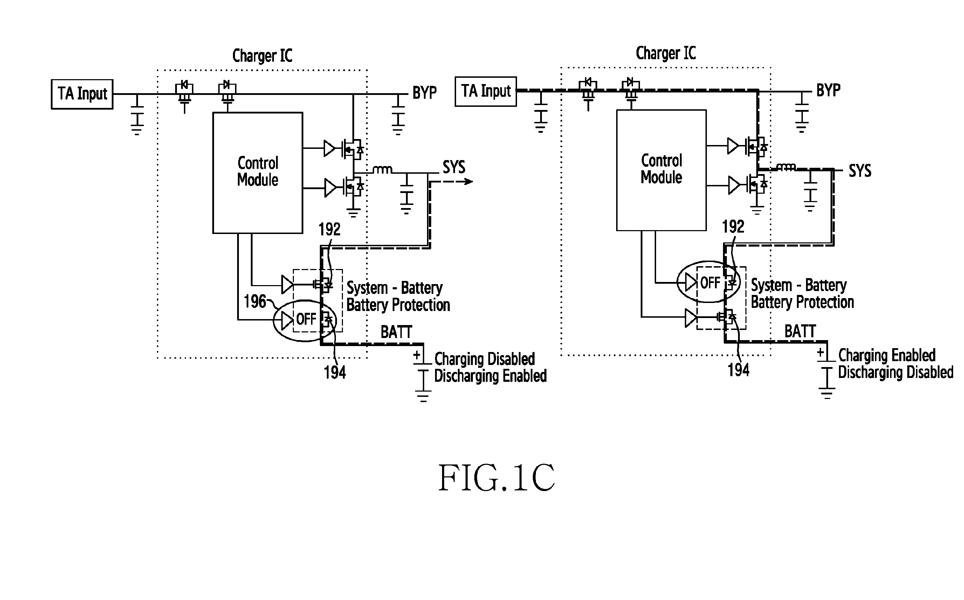

FIG. 1C illustrates current flow of a power manager according to various embodiments of the present disclosure.

Referring to FIG. 1C, the power manager may perform a charging function and a battery protection function without having to include an additional battery protection IC for preventing over-charging or over-discharging.

The power manager may form a power path to a terminal set or a battery, and may form a charging path or a discharging path for the battery.

The power manager may include a control module or a switch.

The control module may control the switch to perform the charging function and the battery protection function.

The switch may include a first switch 192 for selectively controlling charging power to be supplied to the battery and a second switch 194 for selectively controlling the charging power to be supplied to the battery. For example, the first switch 192 and the second switch 194 may each be implemented by a FET.

The first switch 192 may be a charging FET, and may include a diode which cuts off battery power to avoid an overflow to the terminal set. In addition, the second switch 194 may be a discharging FET, and may include a diode which cuts off the charging power to avoid an overflow to the battery.

For example, the first switch 192 forms a path so that the charging power is supplied to the battery, and may include the diode which cuts off the battery power to avoid an overflow to the terminal set. The second switch 194 forms a path so that the battery power is supplied to the terminal set, and may include a diode which cuts of the charging power to avoid an overflow to the battery.

The first switch 192 and the second switch 194 may form a power path so that the charging power is supplied to the terminal set and the battery to provide the charging function, for example, when the charging adapter is connected to the electronic device. The first switch 192 and the second switch 194 may be in an ON state so that the charging power is supplied to the terminal set and the battery. For example, the power manager may allow the first switch 192 to maintain the ON state so that the charging power is supplied to the battery through the first switch 192, and may allow the second switch 194 to maintain the ON state so that the battery power is supplied to the terminal set through the second switch 194.

When over-charging is detected, the first switch 192 and the second switch 194 may form a discharging path for the battery to provide the battery protection function. The second switch 194 transitions to an OFF state 196, and the first switch 192 maintains an ON state, so that the charging power is cut off from being supplied to the battery. As illustrated, since the second switch 194 is in the OFF state 196, the charging power of the charging adapter is not supplied to the battery through a diode, and the battery power may be supplied to the terminal set through the diode of the second switch 194 in the OFF state. In this case, the power manager may control the first switch 192 and the second switch 194 to cut off charging of the battery and may enable discharging of the battery, thereby being able to perform the battery protection function depending on over-charging.

The first switch 192 and the second switch 194 may form the charging path when over-discharging of the battery occurs, for example, in a situation where a battery discharging path is formed. For example, the second switch 194 may transition to an ON state and the first switch 192 may transition to an OFF state to form the charging path. As illustrated, since the first switch 192 is in the OFF state, the charging power of the charging adapter may be supplied to the battery through the diode, and the battery power may be supplied to the first switch 192 through the second switch 194 in the ON state but may be cut off from being supplied to the terminal set through the diode of the first switch 192 in the OFF state. In this case, the power manager may control the first switch 192 and the second switch 194 to cut off discharging of the battery and to enable charging of the battery, thereby being able to perform the battery protection function depending on over-discharging.

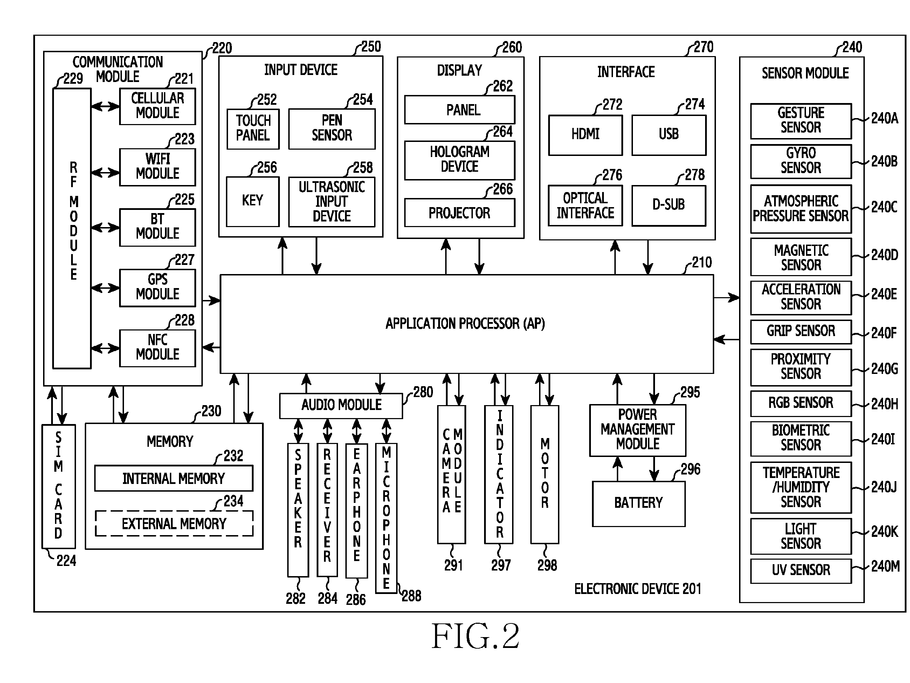

FIG. 2 is a block diagram illustrating an electronic device according to various embodiments of the present disclosure.

Referring to FIG. 2, an electronic device 201 may implement, for example, all or a portion of the electronic device 101 illustrated in FIGS. 1A, 1B, and 1C. The electronic device 201 may include at least one AP 210, a communication module 220, a subscriber identification module (SIM) card 224, a memory 230, a sensor module 240, an input unit 250, a display 260, an interface 270, an audio module 280, a camera module 291, a power management module 295, a battery 296, an indicator 297, and a motor 298.

The AP 210 may drive an operating system (OS) or an application to control a plurality of hardware or software elements connected to the AP 210, and perform various data processes including multimedia data and operations. The AP 210 may be implemented, for example, as a system on chip (SoC). The AP 210 may further include a GPU (not shown).

The communication module 220 (e.g., the communication interface 170) may perform data transmission/reception with other electronic devices (e.g., the electronic device 102, 104 or the server 106). The communication module 220 may include a cellular module 221, a Wi-Fi module 223, a BT module 225, a GPS module 227, a near field communication (NFC) module 228, and a RF module 229.

The cellular module 221 may provide voice communication, image communication, an SMS, or an Internet service, etc. via a communication network (e.g., LTE, LTE-A, CDMA, WCDMA, UMTS, WiBro, or GSM, etc.). Also, the cellular module 221 may perform authentication of an electronic device within a communication network using, for example, a subscriber identity module (e.g., a SIM card 224). The cellular module 221 may perform at least a portion of functions that may be provided by the AP 210. For example, the cellular module 221 may perform at least a portion of a multimedia control function.

The cellular module 221 may include a CP. Also, the cellular module 221 may be, for example, implemented as a SoC. Though elements such as the cellular module 221 (e.g., a CP), the memory 230, or the power management module 295, etc. are illustrated as elements separated from the AP 210 in FIG. 2, the AP 210 may be implemented to include at least a portion (e.g., the cellular module 221) of the above-described elements.

The AP 210 or the cellular module 221 (e.g., a CP) may load an instruction or data received from at least one of a non-volatile memory and other elements connected thereto onto a volatile memory, and process the same. Also, the AP 210 or the cellular module 221 may store data received from at least one of other elements or generated by at least one of other elements in a non-volatile memory.

Each of the Wi-Fi module 223, the BT module 225, the GPS module 227, or the NFC module 228 may include, for example, a processor for processing data transmitted/received via a relevant module. Though the cellular module 221, the Wi-Fi module 223, the BT module 225, the GPS module 227, or the NFC module 228 are illustrated as separate blocks in FIG. 2, at least a portion (e.g., two or more elements) of the cellular module 221, the Wi-Fi module 223, the BT module 225, the GPS module 227, or the NFC module 228 may be included in one IC or an IC package. For example, at least a portion (e.g., a CP corresponding to the cellular module 221 and a Wi-Fi processor corresponding to the Wi-Fi module 223) of processors corresponding to each of the cellular module 221, the Wi-Fi module 223, the BT module 225, the GPS module 227, or the NFC module 228 may be implemented as one SoC.

The RF module 229 may perform transmission/reception of data, for example, transmission/reception of an RF signal. The RF module 229 may include, for example, a transceiver, a power amplifier module (PAM), a frequency filter, or a low noise amplifier (LNA), etc., though not shown. Also, the RF module 229 may further include a part for transmitting/receiving an electromagnetic wave on a free space in wireless communication, for example, a conductor or a conducting line, etc. Though FIG. 2 illustrates the cellular module 221, the Wi-Fi module 223, the BT module 225, the GPS module 227, and the NFC module 228 share one RF module 229, at least one of the cellular module 221, the Wi-Fi module 223, the BT module 225, the GPS module 227, or the NFC module 228 may perform transmission/reception of an RF signal via a separate RF module.

The SIM card 224 may be a card including a subscriber identify module, and may be inserted into a slot formed in a specific position of the electronic device. The SIM card 224 may include unique identify information (e.g., integrated circuit card identifier (ICCID)) or subscriber information (e.g., international mobile subscriber identity (IMSI)).

The memory 230 (e.g., the memory 130) may include a built-in memory 232 or an external memory 234. The built-in memory 232 may include, for example, at least one of a volatile memory (e.g., dynamic RAM (DRAM), static RAM (SRAM), synchronous dynamic RAM (SDRAM)) and a non-volatile memory (e.g., one-time programmable ROM (OTPROM), programmable ROM (PROM), erasable and programmable ROM (EPROM), electrically erasable and programmable ROM (EEPROM), mask ROM, flash ROM, not and (NAND) flash memory, not or (NOR) flash memory, etc.).

The built-in memory 232 may be an SSD. The external memory 234 may further include a flash drive, for example, compact flash (CF), secure digital (SD), micro-SD, mini-SD, extreme digital (xD), or a memory stick. The external memory 234 may be functionally connected with the electronic device 201 via various interfaces. The electronic device 201 may further include a storage device (or a storage medium) such as a hard drive.

The sensor module 240 may measure a physical quantity or detect an operation state of the electronic device 201, and convert the measured or detected information to an electric signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., red, green, blue (RGB) sensor), a biometric sensor 240I, a temperature/humidity sensor 240J, an illuminance sensor 240K, or an ultraviolet (UV) sensor 240M. Additionally or alternatively, the sensor module 240 may include, for example, an E-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), or a fingerprint sensor (not shown), etc. The sensor module 240 may further include a control circuit for controlling at least one sensor belonging thereto.

The input unit 250 may include a touch panel 252, a (digital) pen sensor 254, a key 256, or an ultrasonic input unit 258. The touch panel 252 may recognize a touch input using at least one of capacitive, resistive, infrared, or ultrasonic methods. Also, the touch panel 252 may further include a control circuit. A capacitive touch panel may perform detection by a physical contact or proximity recognition. The touch panel 252 may further include a tactile layer. In this case, the touch panel 252 may provide a tactile reaction to a user.

The (digital) pen sensor 254 may be implemented using, for example, a method which is the same as or similar to receiving a user's touch input, or using a separate sheet for detection. The key 256 may include, for example, a physical button, an optical key or keypad. The ultrasonic input unit 258 is a unit for recognizing data by detecting a sound wave using a microphone (e.g., a microphone 288) in the electronic device 201 via an input tool generating an ultrasonic signal, and enables wireless recognition. The electronic device 201 may receive a user input from an external device (e.g., a computer or a server) connected to the communication module 220.

The display 260 (e.g., the display 150) may include a panel 262, a hologram device 264, or a projector 266. The panel 262 may be, for example, an LCD, or an active-matrix organic light-emitting diode (AM-OLED), etc. The panel 262 may be implemented, for example, such that it is flexible, transparent, or wearable. The panel 262 may be configured as one module together with the touch panel 252. The hologram device 264 may show a three-dimensional image in the air using interferences of light. The projector 266 may project light onto a screen to display an image. The screen may be positioned, for example, inside or outside the electronic device 201. The display 260 may further include a control circuit for controlling the panel 262, the hologram device 264, or the projector 266.

The interface 270 may include, for example, an HDMI 272, a USB 274, an optical interface 276, or a D-subminiature (D-sub) 278. The interface 270 may be included, for example, in the communication interface 170. Additionally or alternatively, the interface 270 may include, for example, a mobile high-definition link (MHL) interface, an SD card/multi-media card (MMC) interface, or an infrared data association (IrDA) standard interface.

The audio module 280 may convert a sound and an electric signal in dual directions. At least a partial element of the audio module 280 may be included, for example, in the I/O interface 150. The audio module 280 may process sound information input or output via, for example, a speaker 282, a receiver 284, an earphone 286, or a microphone 288, etc.

The camera module 291 may capture a still image and a moving picture. The camera module 291 may include one or more image sensors (e.g., a front sensor or a rear sensor), a lens (not shown), an image signal processor (ISP) (not shown), or a flash (not shown) (e.g., an LED or xenon lamp).

The power management module 295 may manage power supply of the electronic device 201. Though not shown, the power management module 295 may include, for example, a PMIC, a charger IC, or a battery or a battery or fuel gauge.

The PMIC may be mounted, for example, inside an IC or a SoC semiconductor. A charging method may be classified into a wired charging method and a wireless charging method. The charging IC may charge a battery and prevent introduction of an overvoltage or an overcurrent from a charger. The charging IC may include a charging IC for at least one of the wired charging method and the wireless charging method. The wireless charging method may be, for example, a magnetic resonance method, a magnetic induction method, or an electromagnetic wave method, etc., and may additionally include an additional circuit for wireless charging, for example, a circuit such as a coil loop, a resonance circuit, or a rectifier, etc.

The battery gauge may measure, for example, a remnant of the battery 296, a voltage, a current, or a temperature while charging. The battery 296 may store or generate electricity, and supply power to the electronic device 201 using the stored or generated electricity. The battery 296 may include, for example, a rechargeable battery or a solar battery.

The indicator 297 may display a specific state of the electronic device 201 or a portion thereof (e.g., the AP 210), for example, a booting state, a message state, or a charging state, etc. The motor 298 may convert an electric signal to mechanical vibration. Though not shown, the electronic device 201 may include a processor (e.g., a GPU) for supporting a mobile TV. The processor for supporting the mobile TV may process media data corresponding to standards, for example, such as digital multimedia broadcasting (DMB), digital video broadcasting (DVB), or a media flow, etc.

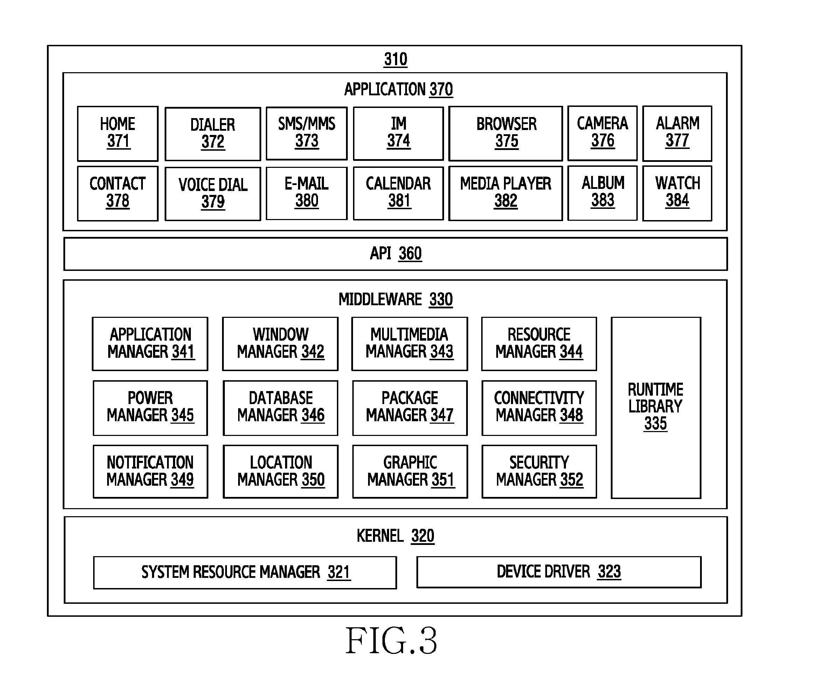

FIG. 3 is a block diagram of a program module according to various embodiments of the present disclosure.

Referring to FIG. 3, a program module 310 (for example, the programs 140) may include an OS for controlling resources related to the electronic device (for example, the electronic device 100) and/or various applications (for example, the application 147) executed in the operating system. The operating system may be, for example, Android®, iOS®, Windows®, Symbian®, Tizen®, Bada®, or the like.

The programming module 310 may include a kernel 320, middleware 330, an API 360, and/or at least one application 370. At least some of the program module 310 may be preloaded in the electronic device or downloaded from the server.

The kernel 320 (for example, the kernel 141) may include, for example, a system resource manager 321 or a device driver 323. The system resource manager 321 may control, allocate, or collect the system resources. The system resource manager 321 may include a process management unit, a memory management unit, or a file system management unit. The device driver 323 may include, for example, a display driver, a camera driver, a BT driver, a shared-memory driver, a USB driver, a keypad driver, a Wi-Fi driver, an audio driver, or an inter-process communication (IPC) driver.

The middleware 330 may provide a function required by the applications 370 in common or provide various functions to the applications 370 through the API 360 so that the applications 370 can efficiently use limited system resources within the electronic device. The middleware 330 (for example, the middleware 143) may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include, for example, a library module that a compiler uses to add new functions through a programming language while the application 370 is executed. The runtime library 335 may perform I/O management, memory management, or a function for an arithmetic function.

The application manager 341 may manage, for example, a life cycle of at least one application 370. The window manager 342 may manage graphical user interface (GUI) resources used by a screen. The multimedia manager 343 may process formats required for the reproduction of various media files, and may perform an encoding or decoding of the media file by using a codec suitable for the corresponding format. The resource manager 344 may manage resources such as a source code, a memory, and a storage space of at least one of the applications 370.

The power manager 345 may operate together with a basic input/output system (BIOS) to manage a battery or power and may provide power information required for the operation of the electronic device. The database manager 346 may generate, search for, or change a database to be used by at least one application 370. The package manager 347 may manage the installation or the updating of applications distributed in the form of package file.

The connectivity manager 348 may manage a wireless connection such as, for example, Wi-Fi or BT. The notification manager 349 can display or notify of an event such as an arrival message, proximity notification, and the like in such a way that does not disturb a user. The location manager 350 may manage location information of the electronic device. The graphic manager 351 may manage graphic effects to be provided to a user and user interfaces. The security manager 352 may provide security functions required for system security or user authentication. When the electronic device (for example, electronic device 100) includes a call function, the middleware 330 may further include a telephony manager for managing a voice call function or a video call function of the electronic device.

The middleware 330 may include a middleware module for forming a combination of various functions of the aforementioned components. The middleware 330 may provide modules specialized according to types of operating systems in order to provide differentiated functions. Further, the middleware 330 may dynamically remove some of the existing components or add new components.

The API 360 (for example, the API 145) is, for example, a set of API programming functions, and a different configuration thereof may be provided according to an operating system. For example, Android or iOS may provide one API set per platform, and Tizen may provide two or more API sets per platform.

The applications 370 (for example, the application 147) may include, for example, one or more applications which can provide functions such as a home 371, a dialer 372, an SMS/MMS 373, an instant messenger (IM) 374, a browser 375, a camera 376, an alarm 377, contacts 378, a voice dialer 379, an email 380, a calendar 381, a media player 382, an album 383, a watch 384, health care (for example, measure exercise quantity or blood sugar), or an environment information (for example, atmospheric pressure, humidity, or temperature information).

The applications 370 may include an application supporting information exchange (hereinafter, referred to as an "information exchange application") between the electronic device (for example, the electronic device 100) and an external electronic device. The information exchange application may include, for example, a notification relay application for transferring predetermined information to an external electronic device or a device management application for managing an external electronic device.

For example, the notification relay application may include a function of transferring, to the external electronic device, notification information generated from other applications of the electronic device 100 (for example, an SMS/MMS application, an e-mail application, a health management application, or an environmental information application). Further, the notification relay application may receive notification information from, for example, a control device and provide the received notification information to the user. The device management application may manage

(for example, install, delete, or update), for example, a function for at least a part of the external electronic device communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

The applications 370 may include an application (for example, health management application) designated according to attributes of the external electronic device (for example, attributes of the electronic device such as the type of electronic device which corresponds to a mobile medical device). The applications 370 may include an application received from the external electronic devices (for example, the server or the electronic device). The applications 370 may include a preloaded application or a third party application which can be downloaded from the server. The names of the components of the program module 310 according to the embodiment illustrated in FIG. 3 may vary according to the type of operating system.

At least some of the programming module 310 may be implemented by software, firmware, hardware, or a combination of two or more thereof. At least some of the programming module 310 may be implemented (for example, executed) by the processor (for example, the AP). At least some of the programming module 310 may include, for example, a module, program, routine, sets of instructions, or process for performing one or more functions.

The term "module" used in the present disclosure may refer to, for example, a unit including a combination of one or more hardware, software, or firmware. The term "module" may be interchangeably used with a term such as "unit," "logic," "logical block," "component," or "circuit," etc. The term "module" may refer to a minimum unit of an integrally configured part or a portion thereof. The term "module" may refer to a minimum unit performing one or more functions or a portion thereof. The term "module" may refer to a device that is mechanically or electronically implemented. For example, a "module" may include at least one of an ASIC chip, an FPGA, or a programmable-logic device which are known, or will be developed in the future, and performing certain operations.

At least a portion of an apparatus (e.g., modules or functions thereof) or a method (e.g., steps) may be implemented as an instruction stored in a computer-readable storage media, for example, in the form of a programming module. An instruction, when executed by one or more processors (e.g., the processor 120), may allow the one or more processors to perform a function corresponding to the instruction. The computer-readable storage media may be stored in, for example, the memory 130. At least a portion of a programming module may be implemented (e.g., executed) by, for example, the processor 120. At least a portion of the programming module may include, for example, a module, a program, a routine, sets of instructions, or a process, etc. for performing one or more functions.

The computer-readable storage media may be stored in a hard disk, a magnetic media such as a floppy disk and a magnetic tape, a compact disc ROM (CD-ROM), optical media such as a DVD, magneto-optical media such as a floptical disk, and a hardware device configured for storing and performing a program instruction (e.g., a programming module) such as a ROM, a RAM, a flash memory, etc. Also, the program instruction may include not only a machine language code generated by a compiler but also a high-level language code executable by a computer using an interpreter, etc. The above-described hardware device may be configured to operate as one or more software modules in order to perform an operation of the present disclosure, and vice versa.

A module or a programming module may include at least one of the above-described elements, omit a portion thereof, or further include additional other elements. Operations performed by a module, a programming module, or other elements may be executed in a sequential, parallel, or heuristic method. Also, a portion of the operations may be executed in a different sequence, omitted, or other operations may be added.

A power management device may include a switch for providing a power path between a battery and a terminal set, and a control module configured to control the switch to provide a charging function by forming a power path between the battery and the terminal set and to provide a battery protection function by forming a discharging path or a charging path with respect to the battery. The power management device may include at least one of a PMIC and a charger IC.

The power management device may include a first switch controlled to supply charging power to the battery and a second switch controlled not to supply the charging power to the battery. For example, upon detection of over-charging for the battery, the control module may be configured to control the first switch and the second switch to form the discharging path for the battery.

Upon detection of over-discharging for the battery, the control module may be configured to control the first switch and the second switch to form the charging path for the battery.

The first switch may be configured to supply the charging power to the battery, and to cut off battery power from being supplied to the terminal set.

The second switch may be configured to supply battery power to the terminal set, and to cut off the charging power from being supplied to the battery.

The switch may be constructed of a FET and a diode.

An electronic device may include a terminal set, a battery, and a power manager which includes a switch for providing a power path between the battery and the terminal set, and which provides a charging function and a battery protection function. For example, the power manager may be configured to control the switch to provide a charging function by forming a power path between the battery and the terminal set and to provide a battery protection function by forming a discharging path or a charging path with respect to the battery.

The power manager may be configured to control the switch to form a power path for the battery and the terminal set when charging power is supplied, and to control the switch to form the discharging path not to supply the charging power to the battery when battery over-charging is detected.

The power manager may be configured to control the switch to form the charging path to supply the charging power to the battery when the battery over-discharging is detected by the discharging path.

The switch may be configured to include a first switch consisting of a first FET and a first diode and a second switch consisting of a second FET and a second diode.

The first switch may be configured to change the first FET to an OFF state to supply the charging power to the battery through the first diode, and to cut off battery power from being supplied to the terminal set, and may be configured to change the first FET to an ON state to supply the charging power to the battery through the FET, and to cut off the battery power from being supplied to the terminal set through the first diode.

The second switch may be configured to change the second FET to an OFF state to supply the battery power to the terminal set through the second diode, and to cut off the charging power from being supplied to the battery, and may be configured to change the second FET to an ON state to supply the battery power to the terminal set through the FET, and to cut off the charging power from being supplied to the battery through the second diode.

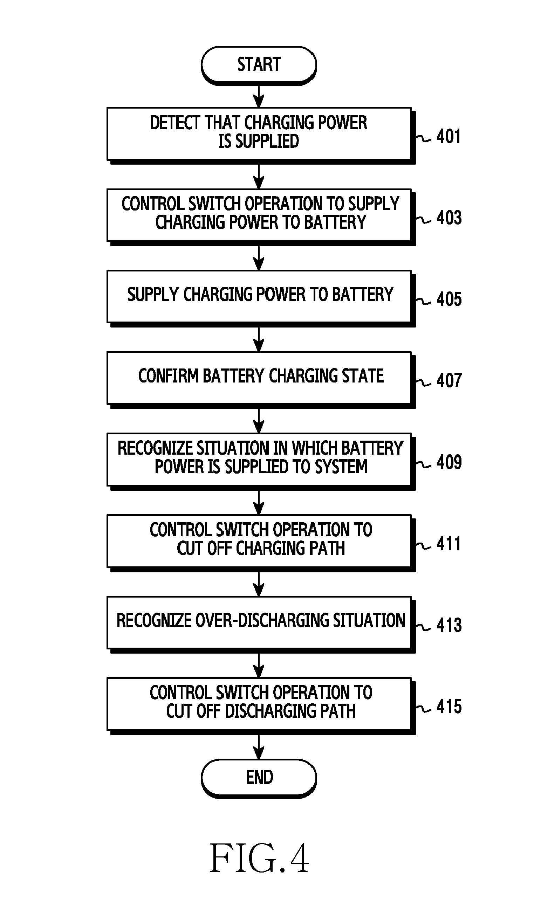

FIG. 4 is a flowchart of a method for power management according to various embodiments of the present disclosure.

Referring to FIG. 4, the power manger (for example, the power manager 180) may provide charging power to a battery, and may perform a battery protection function. The power manager may include at least one of a power management integrated circuit (PMIC) and a charger integrated circuit (IC).

In operation 401, the power manager may detect that the charging power is supplied. According to one embodiment, the power manager may confirm the charging power supplied by a charging adapter, a battery, or the like.

In operation 403, the power manager may control a switch operation to supply the charging power to the battery. According to one embodiment, the power manager may control the switch operation to supply the charging power to the terminal set and the battery. For example, the power manager may form a power path so that the charging power (e.g., power supplied from the adapter) is supplied to the battery to charge the battery, and so that battery power (e.g., power supplied from the battery) is supplied to the terminal set to operate the electronic device.

In operation 405, the power manager may supply the charging power to the battery through the charging path formed by the switch. Therefore, the battery may be charged by the charging power supplied by the power manager.

In operation 407, the power manager may confirm a battery charging state. According to one embodiment, the battery charging state may be associated with over-charging or over-discharging.

In operation 409, the power manager may recognize an over-charging state of the battery charging state. According to one embodiment, the power manager may confirm the over-charging state on the basis of information associated with voltage or current supplied to the battery.

In operation 411, the power manager may control the switch operation to cut off the charging path. According to various embodiments, the power manager may perform a battery protection function by cutting off the power path formed by the switch to the battery. In this case, the power manager may maintain a power path to the terminal set so that the battery power is supplied to the terminal set.

In operation 413, the power manager may confirm an over-discharging state on the basis of the battery charging state. According to one embodiment, the power manager may confirm the over-discharging state on the basis of information associated with voltage or current output from the battery.

In operation 415, the power manager may control the switch operation to cut off the discharging path. According to various embodiments, the power manager may perform the battery protection function by forming the power path cut off by the switch to the battery. In this case, the power manager may cut off the power path to the terminal.

A charging method may provide a charging function by controlling a switch to form a power path between a battery and a terminal set in response to supply of charging power, and providing a battery protection function by controlling the switch to form a discharging path or a charging path on the basis of a battery state.

The providing of the battery protection function may include forming the discharging path to not supply the charging power to the battery by controlling the switch upon detection of a battery over-charging state.

The forming of the discharging path may include maintaining an ON state of the switch configured to supply battery power to the terminal sets and to cut off the charging power from being supplied to the battery.

The providing of the battery protection function may include forming a charging path by controlling the switch to not supply battery power to the terminal set upon detection of a battery over-discharging state.

The forming of the charging path may include maintaining an ON state of the switch configured to supply the charging power to the battery and to cut off the battery power from being supplied to the terminal set.

The power manager may provide the charging function and the battery protection function on the basis of a battery state and a system state of the electronic device.

For example, the power manager may provide the charging function or the battery protection function by controlling the switch on the basis of the battery and system state as disclosed in Table 1 below.

**Table 1**

| The battery and system state | first switch (charging FET) | second switch (discharging FET) |
|---|---|---|
| Battery insertion | ON | ON |
| Travel adapter insertion | ON | ON |
| Battery full charge (4.4V) | ON | ON |
| System cut-off state (3.3V) | ON | ON |
| Battery over-charge voltage (4.45V) | OFF | ON |
| Battery over-discharge voltage (3V) | ON | OFF |
| Battery over-charging current (4.5A) | OFF | ON |
| Battery over-discharging current (4.5A) | ON | OFF |
| Battery short-circuit | ON | OFF |

The power manager may allow the charging path or the discharging path to be formed by changing at least one switch to an OFF state when the battery protection function is performed, while providing the charging function by maintaining both of the first switch and the second switch to an ON state.

In addition, the power manager may perform the charging function and the battery protection function by using the switch consisting of the first switch and the second switch, and thus may provide improved performance than the conventional charging system as shown in Table 2 below.

**Table 2**

| | conventional charging system | present disclosure |
|---|---|---|
| IC size | Charger IC : 3x3mm Battery Protection IC : 2x3mm Total: 15mm | Battery Charger IC : 3x3.5mm Battery Protection IC : Not used Total: 10.5mm (30% reduction) |
| battery capacity | PCB for battery protection: using 25% of battery size, thus not increasable battery capacity | PCB for battery protection not used, thus increasable battery capacity |
| resistance on Power path | Charger IC : 20mOhm Battery Protection IC : 30mOhm Total: 50mOhm | Charger IC : 20mOhm Battery Protection IC : Not used Total: 20mOhm (40% reduction) |
| voltage drop | 50mV | 20mV (40% reduction) |

For example, since the power manager performs the battery protection function, a battery protection IC is not necessary, and thus a size of the electronic device can be decreased. As a result, a battery size or capacity can be increased. In addition, the number of ICs in the charging system is decreased to reduce resistance on the charging/discharging path, and a resultant battery voltage drop may result in an increase in charging efficiency.

According to various embodiments of the present disclosure, a charging control method and an electronic device for handling the method provide a charging system having a battery protection function without a battery protection IC. Therefore, a size of the electronic device can be decreased, and as a result, a battery size or capacity can be increased. In addition, the number of ICs in the charging system is decreased to reduce resistance on the charging/discharging path, and a resultant battery voltage drop can be decreased.

The above figures are provided as an example only. At least some of the steps discussed with respect to these figures can be performed concurrently, performed in a different order, and/or altogether omitted. It will be understood that the provision of the examples described herein, as well as clauses phrased as "such as," "e.g.", "including", "in some aspects," "in some implementations," and the like should not be interpreted as limiting the claimed subject matter to the specific examples. As used throughout the disclosure, the term "gesture" may refer to a touch, a sliding gesture, a flicking gesture, and or any other suitable type of input. According to aspects of the disclosure, touches that are performed on different user interface components (or in different locations of a touchscreen) may be considered to be different gestures.

The above-described aspects of the present disclosure can be implemented in hardware, firmware or via the execution of software or computer code that can be stored in a recording medium such as a CD-ROM, a DVD, a magnetic tape, a RAM, a floppy disk, a hard disk, or a magneto-optical disk or computer code downloaded over a network originally stored on a remote recording medium or a non-transitory machine-readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps may be implemented in hardware, software or a combination of both and may be performed in whole or in part within the programmed instructions of a computer. No claim element herein is to be construed under the provisions of 35 U.S.C. 112(f) unless the element is expressly recited using the phrase "means for".

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a terminal set;
a battery; and
a power manager including a power switch configured to provide a charging function by providing charging power provided from a charging adapter to at least one of the battery or the terminal set, and a battery protection function by forming at least one of a discharging path or a charging path with respect to the battery.

2. The electronic device of claim 1, wherein the power manager is further configured to control the power switch to form the power path for the battery and the terminal set when charging power is supplied.

3. The electronic device of claim 1, wherein the power manager is configured to control the power switch to form the discharging path to discharge the battery when battery over-charging is detected.

4. The electronic device of claim 3, wherein the power manager is configured to control the power switch to form the charging path to supply the charging power to the battery when the battery over-discharging is detected by the discharging path.

5. The electronic device of claim 1, wherein the power switch comprises:
a first switch including a first field-effect transistor (FET) and a first diode; and
a second switch including a second FET and a second diode.

6. The electronic device of claim 5, wherein the first switch is configured to:
change the first FET to an OFF state to supply the charging power to the battery through the first diode and preclude the battery power from being supplied to the terminal set, and
change the first FET to an ON state to supply the charging power to the battery through the first FET and preclude the battery power from being supplied to the terminal set through the first diode.

7. The electronic device of claim 5, wherein the second switch is configured to:
change the second FET to an OFF state to supply the battery power to the terminal set through the second diode and to preclude the charging power from being supplied to the battery, and
change the second FET to an ON state to supply the battery power to the terminal set through the second FET and preclude the charging power from being supplied to the battery through the second diode.

8. The electronic device of claim 1, wherein the power manager comprises at least one of a power management integrated circuit (PMIC) and a charger integrated circuit (IC).

9. A charging method in an electronic device, the charging method comprising:
in response to supply of charging power, providing a charging function by controlling a switch to provide the supplied charging power to at least one of a battery or a terminal set; and
providing a battery protection function by controlling the switch to form a discharging path or a charging path based on a battery state.

10. The charging method of claim 9, wherein the providing of the battery protection function further comprises forming the discharging path to discharge the battery by controlling the switch upon detection of a battery over-charging state.

11. The charging method of claim 10, wherein the forming of the discharging path further comprises maintaining an ON state of the switch configured to supply battery power to the terminal set and precluding the charging power from being supplied to the battery.

12. The charging method of claim 9, wherein the providing of the battery protection function further comprises forming the charging path by controlling the switch to preclude supplying of the battery power to the terminal set upon detection of a battery over-discharging state.

13. The charging method of claim 12, wherein the forming of the charging path comprises further maintaining an ON state of the switch configured to supply the charging power to the battery and precluding the battery power from being supplied to the terminal set.
